# EUROPÄISCHE PATENTSCHRIFT

(11) **EP 3 619 243 B1**
(45) Veröffentlichungstag und Bekanntmachung des Hinweises auf die Patenterteilung: **17.02.2021**
(21) Anmeldenummer: 18718477.5
(22) Anmeldetag: 25.04.2018
(51) Int. Cl.: C08F 2/01, C08F 2/08, C08L 33/02

(54) **VERFAHREN ZUR DISKONTINUIERLICHEN HERSTELLUNG VON SUPERABSORBERPARTIKELN DURCH POLYMERISATION EINER IN EINEM HYDROPHOBEN LÖSUNGSMITTEL DISPERGIERTEN WÄSSRIGEN MONOMERLÖSUNG**
METHOD FOR THE DISCONTINUOUS PRODUCTION OF SUPERABSORBER PARTICLES BY POLYMERIZING AN AQUEOUS MONOMER SOLUTION DISPERSED IN A HYDROPHOBIC SOLVENT
PROCÉDÉ DE FABRICATION DISCONTINUE DE PARTICULES SUPERABSORBANTES PAR POLYMÉRISATION D'UNE SOLUTION AQUEUSE DE MONOMÈRE EN DISPERSION DANS UN SOLVANT HYDROPHOBE

(30) Priorität: 02.05.2017 EP 17169021
(43) Veröffentlichungstag der Anmeldung: 11.03.2020
(73) Patentinhaber: BASF SE, 67056 Ludwigshafen am Rhein (DE)
(72) Erfinder: VON DER HEYDT, Marc Andre, 67056 Ludwigshafen (DE); STANITZEK, Uwe, 67056 Ludwigshafen (DE); KRUEGER, Marco, 67056 Ludwigshafen (DE)
(74) Vertreter: BASF IP Association
(86) Internationale Anmeldenummer: PCT/EP2018/060548
(87) Internationale Veröffentlichungsnummer: WO 2018/202490

(56) Entgegenhaltungen:
- WO-A2-2008/084031

## Beschreibung

Die vorliegende Erfindung betrifft ein Verfahren zur diskontinuierlichen Herstellung von Superabsorberpartikeln durch Polymerisation einer in einem hydrophoben Lösungsmittel dispergierten wässrigen Monomerlösung, wobei die mindestens zwei Rührbehälter zeitlich versetzt betrieben werden.

Die Herstellung von Superabsorberpartikeln wird in der Monographie " Modern Superabsorbent Polymer Technology" , F.L. Buchholz und A.T. Graham, Wiley-VCH, 1998, Seiten 69 bis 117, beschrieben.

Superabsorberpartikel werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der Superabsorberpartikel können über den Vernetzungsgrad eingestellt werden. Mit steigendem Vernetzungsgrad steigt die Gelfestigkeit und sinkt die Absorptionskapazität.

Zur Verbesserung der Anwendungseigenschaften, wie beispielsweise Flüssigkeitsweiterleitung im gequollenen Gelbett (SFC) in der Windel und Absorption unter Druck (AUL), werden Superabsorberpartikel im allgemeinen oberflächennachvernetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können.

JP 2012-7062 A2, US 5,807,916 A und WO 2008/084031 A1 offenbaren Verfahren zur Herstellung von Superabsorberpartikeln durch Polymerisation einer dispergierten wässrigen Monomerlösung.

US 2015/0080539 beschreibt ein diskontinuierliches Verfahren unter Verwendung eines speziellen Rührbehälters zur Verkürzung des Aufheizens bzw. Abkühlens.

Aufgabe der vorliegenden Erfindung war die Bereitstellung eines verbesserten Verfahrens zur diskontinuierlichen Herstellung von Superabsorbern durch Polymerisation einer in einem hydrophoben Lösungsmittel dispergierten wässrigen Monomerlösung, wobei insbesondere die Leistung der Kühlung besser ausgenutzt wird.

Gelöst wurde die Aufgabe durch ein Verfahren zur diskontinuierlichen Herstellung von Superabsorberpartikeln durch Polymerisation einer in einem hydrophoben Lösungsmittel dispergierten wässrigen Monomerlösung in mindestens zwei parallelen Rührbehältern, dadurch gekennzeichnet, dass die mindestens zwei Rührbehälter zeitlich versetzt betrieben werden und die relative zeitliche Differenz des Anfahrens der Reaktion jeweils zweier zeitlich aufeinander folgender Rührbehälter im Bereich von 50%/n bis 150%/n der Chargenzeit beträgt, wobei n die Anzahl der parallelen Rührbehälter und die Chargenzeit die Zeit zwischen dem Anfahren der Reaktion bis zum Anfahren der folgenden Reaktion im selben Rührbehälter ist.

Die Chargenzeit ist also die Zeit vom Befüllen des Rührbehälters über alle Reaktionsschritte im Rührbehälter und dem Entleeren des Rührbehälters bis zum erneuten Befüllen des Rührbehälters.

Die zeitliche Differenz des Anfangs der Chargen jeweils zweier zeitlich aufeinander folgender Rührbehälter beträgt vorzugsweise von 65%/n bis 135%/n, besonders bevorzugt von 80%/n bis 120%/n, ganz besonders bevorzugt von 90%/n bis 110%/n, der Chargenzeit.

In einer bevorzugten Ausführungsform der vorliegenden Erfindung werden zwei, drei oder vier parallele Rührbehälter betrieben werden (n = 2, 3, 4).

In einer ganz bevorzugten Ausführungsform der vorliegenden Erfindung werden zwei parallele Rührbehälter betrieben werden (n = 2). Die zeitliche Differenz des Anfangs der Chargen der zwei zeitlich aufeinander folgenden Rührbehälter beträgt vorzugsweise von 32,5% bis 67,5%, besonders bevorzugt von 40% bis 60%, ganz besonders bevorzugt von 45% bis 55%, der Chargenzeit.

Als hydrophobe Lösungsmittel werden üblicherweise Kohlenwasserstoffe und Kohlenwasserstoffgemische eingesetzt.

Die Kohlenwasserstoffe oder Kohlenwasserstoffgemische sieden vorzugsweise im Bereich von 50 bis 150°C, besonders bevorzugt im Bereich von 60 bis 130°C, ganz besonders im Bereich von 70 bis 110°C.

Im Folgenden wird die Herstellung der Superabsorberpartikel erläutert:
Die zur Herstellung der Superabsorberpartikel eingesetzte wässrige Monomerlösung enthält üblicherweise
a) mindestens ein ethylenisch ungesättigtes, säuregruppentragendes Monomer, das zumindest teilweise neutralisiert sein kann,
b) mindestens einen Vernetzer,
c) mindestens einen Initiator
d) optional ein oder mehrere mit den unter a) genannten Monomeren copolymerisierbare ethylenisch ungesättigte Monomere und
e) optional ein oder mehrere wasserlösliche Polymere.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, Maleinsäure und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) können teilweise neutralisiert sein. Die Neutralisation wird auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalze können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Die Monomere a) enthalten üblicherweise Polymerisationsinhibitoren, vorzugsweise Hydrochinonmonomethylether (MEHQ), als Lagerstabilisator.

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Wird die Polymerisation unter ausreichendem Rückfluss durchgeführt, so kann auf die Inertisierung verzichtet werden. Dabei wird der gelöste Sauerstoff zusammen mit dem verdampfenden Lösungsmittel aus dem Rührbehälter entfernt.

Zur Polymerisation wird die wässrige Monomerlösung in dem hydrophoben Lösungsmittel dispergiert.

Als hydrophobe Lösungsmittel sind alle dem Fachmann zum Einsatz bei der umgekehrten Suspensionspolymerisation bekannten Lösungsmittel einsetzbar. Bevorzugt werden aliphatische Kohlenwasserstoffe, wie n-Hexan, n-Heptan, n-Oktan, n-Nonan, n-Dekan, Cyclohexan oder Mischungen daraus, verwendet. Hydrophobe Lösungsmittel weisen bei 23°C eine Löslichkeit in Wasser zu weniger als 5 g/100 g, vorzugsweise weniger als 1 g/100 g, besonders bevorzugt weniger als 0,5 g/100 g, auf.

Das Verhältnis zwischen hydrophoben Lösungsmittel und wässriger Monomerlösung beträgt vorzugsweise 0,5 bis 3, bevorzugt 0,7 bis 2,5 und ganz bevorzugt von 0,8 bis 2,2.

Der mittlere Durchmesser der wässrigen Monomerlösungstropfen in der Dispersion beträgt, wenn keine Agglomeration durchgeführt wird, vorzugsweise mindestens 100 µm, besonders bevorzugt von 100 bis 1000 µm, besonders bevorzugt von 150 bis 850 µm, ganz besonders bevorzugt von 300 bis 600 µm, wobei der Tropfendurchmesser durch Lichtstreuung bestimmt werden kann und den volumengemittelten mittleren Durchmesser bedeutet.

Der Durchmesser der wässrigen Monomerlösungstropfen kann über die eingetragene Rührenergie und durch geeignete Dispergierhilfsmittel eingestellt werden.

Geeignete Dispergierhilfsmittel sind beispielsweise anionische, kationische, nichtionische oder amphotere Tenside, oder natürliche, halbsynthetische oder synthetische Polymere.

Anionische Tenside sind beispielsweise Natriumpolyoxyethylendodecylethersulfat und Natriumdodecylethersulfat. Ein kationisches Tensid ist beispielsweise Trimethylstearylammoniumchlorid. Ein amphoteres Tensid ist beispielsweise Carboxymethyldimethylcetylammonium. Nichtionische Tenside sind beispielsweise Saccharosefettsäureester, wie Saccharosemonostearat und Saccharosedilaurat, Sorbitanester, wie Sorbitanmonostearat, Polyoxyalkylen-Verbindungen auf Basis von Sorbitanestern, wie Polyoxyethylensorbitanmonostearat.

Natürliche oder halbsynthetische Polymere sind beispielsweise Cellulosederivate, wie Celluloseether, beispielsweise Ethylcellulose, und Celluloseester, beispielsweise Celluloseacetate. Synthetische Polymere sind beispielsweise Polyvinylalkohole, Polyvinylalkohol-Derivate, Maleinsäure-Butadien-Copolymere und quaternäre Salze, wie Styroldimethylaminoethylmethactylat.

Das Dispergierhilfsmittel wird üblicherweise im hydrophoben Lösungsmittel gelöst oder dispergiert.

Das Dispergierhilfsmittel wird in Mengen zwischen 0.01 und 10 Gew.-%, bevorzugt zwischen 0,2 und 5 Gew.-%, besonders bevorzugt zwischen 0,5 und 2 Gew.-%, bezogen auf die wässrige Monomerlösung, eingesetzt.

Die Reaktion wird vorzugsweise unter vermindertem Druck durchgeführt, beispielsweise bei einem Druck von 800 mbar. Über den Druck kann der Siedepunkt der Reaktionsmischung auf die gewünschte Reaktionstemperatur eingestellt werden.

Nach beendeter Polymerisation können die erhaltenen, dispergierten Superabsorberpartikel durch Zusatz weiterer wässriger Monomerlösung und erneuter Polymerisation agglomeriert werden. Die wässrige Monomerlösung kann eine von der ersten wässrigen Monomerlösung verschiedene Zusammensetzung haben. Die Agglomeration kann auch mehrfach durchgeführt weden.

Anschließend werden die erhaltenen, dispergierten Superabsorberpartikel azeotrop entwässert und mittels Filtration vom hydrophoben Lösungsmittel abgetrennt.

In einer bevorzugten Ausführungsform der vorliegenden Erfindung wird die nach der azeotropen Entwässerung erhaltene Dispersion nicht bzw. nicht vollständig abgekühlt. Das noch warme Filtrat wird als hydrophobes Lösungsmittel in die Polymerisation rückgeführt.

Die Superabsorberpartikel können zur weiteren Verbesserung der Eigenschaften oberflächennachvernetzt werden. Geeignete Oberflächennachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide (beispielsweise Denacol® EX810), wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des Weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1199 327 A2 Oxetane und zyklische Harnstoffe und in WO 2003/31482 A1 Morpholin-2,3-dion und dessen Derivate als geeignete Oberflächennachvernetzer beschrieben.

Die Menge an Oberflächennachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

In einer bevorzugten Ausführungsform der vorliegenden Erfindung werden zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt.

Die Einsatzmenge an polyvalentem Kation beträgt beispielsweise 0,001 bis 0,5 Gew.-%, vorzugsweise 0,005 bis 0,2 Gew.-%, besonders bevorzugt 0,02 bis 0,1 Gew.-%.jeweils bezogen auf das Polymer.

Die Oberflächennachvernetzung kann auf zwei unterschiedlichen Wegen durchgeführt werden.

So ist es möglich die entwässerte Dispersion zu filtrieren, wahlweise zu trocknen und erst die so erhaltenen Superabsorberpartikel oberflächennachzuvernetzen (Oberflächennachvernetzung A). Die Oberflächennachvernetzung wird dabei üblicherweise so durchgeführt, dass eine Lösung des Oberflächennachvernetzers und wahlweise eine Lösung des polyvalenten Kations auf die Superabsorberpartikel aufgesprüht wird. Im Anschluss an das Aufsprühen wird thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, und besonders bevorzugt 130 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Es ist aber auch möglich die Oberflächennachvernetzer und wahlweise die polyvalenten Kationen der wahlweise entwässerten Dispersion zuzusetzen, vorzugsweise als wässrige Lösung (Oberflächennachvernetzung B). Anschließend wird thermisch oberflächennachvernetzt. Hierzu werden reaktive Oberflächennachvernetzer, wie Di- oder Polyepoxide, bevorzugt eingesetzt. Nach der thermischen Oberflächennachvernetzung wird wahlweise azeotrop entwässert, filtriert und getrocknet.

### Beispiele 1 bis 10

Für die Berechnungen wurde das Verfahren aus Comparative Example 1 der US 2015/0080539 verwendet. Es wurden zwei parallele Rührbehälter als Reaktoren angenommen. Die Chargenzeit eines Rührbehälters ist die Dauer eines Reaktionszyklusses, d.h. die Zeit zwischen dem Anfahren der Reaktion bis zum Anfahren der folgenden Reaktion im selben Rührbehälter. Die Reaktion im zweiten Rührbehälter wurde zeitlich nach der Reaktion im ersten Rührbehälter angefahren. Es wurde jeweils die maximal erforderliche Kühlleistung für beide Rührbehälter berechnet.

Das Ergebnis ist in Tabelle 1 dargestellt. Der zeitliche Abstand zwischen dem Anfahren der Reaktion im ersten Rührbehälter und dem Anfahren der Reaktion im zweiten Rührbehälter ist in Prozent der Chargenzeit angegeben.

**Tab. 1: Einfluss des zeitlich versetzten Anfahrens**

| Bsp. | relative zeitliche Differenz | maximale Kühlleistung | Einsparung an maximaler Kühlleistung |
|---|---|---|---|
| 1*) | 0% | 2740 kW | 0% |
| 2*) | 10% | 2061 kW | 25% |
| 3*) | 20% | 2357 kW | 14% |
| 4 | 30% | 2002 kW | 27% |
| 5 | 40% | 1630 kW | 41% |
| 6 | 50% | 1370 kW | 50% |
| 7 | 60% | 1623 kW | 41% |
| 8 | 70% | 2029 kW | 26% |
| 9*) | 80% | 2309 kW | 16% |
| 10*) | 90% | 2085 kW | 24% |

| | | | |
|---|---|---|---|
| *) Vergleichsbeispiel | | | |

### Beispiele 11 bis 13

Analog zu den Beispielen 1 bis 10 wurde die maximale Einsparung an maximaler Kühlenergie für zwei (Beispiel 11), drei (Beispiel 12) und vier (Beispiel 13) parallele Rührbehälter berechnet.

**Tab. 2: Einsparung an maximaler Kühlleistung bei mehreren Rührbehältern**

| Bsp. | relative zeitliche Differenz | | | Einsparung an maximaler Kühlleistung |
|---|---|---|---|---|
| | R1 / R2 | R2 / R3 | R3 / R4 | |
| 11 | 50% | --- | --- | 50% |
| 12 | 44% | 41% | --- | 52% |
| 13 | 25% | 25% | 25% | 57% |

Die Beispiele zeigen, dass die Spitzen bei der Kühlleistung gesenkt werden können. Dies ermöglicht die Verwendung kleinerer, kostengünstigerer Kühler und eine bessere Ausnutzung der Kühlleistung.

## Patentansprüche

1. Verfahren zur diskontinuierlichen Herstellung von Superabsorberpartikeln durch Polymerisation einer in einem hydrophoben Lösungsmittel dispergierten wässrigen Monomerlösung in mindestens zwei parallelen Rührbehältern, wobei das hydrophobe Lösungsmittel bei 23°C eine Löslichkeit in Wasser zu weniger als 5 g/100 g aufweist, **dadurch gekennzeichnet, dass** die mindestens zwei Rührbehälter zeitlich versetzt betrieben werden und die relative zeitliche Differenz des Anfahrens der Reaktion jeweils zweier zeitlich aufeinander folgender Rührbehälter im Bereich von 50%/n bis 150%/n der Chargenzeit beträgt, wobei n die Anzahl der parallelen Rührbehälter und die Chargenzeit die Zeit zwischen dem Anfahren der Reaktion bis zum Anfahren der folgenden Reaktion im selben Rührbehälter ist.

2. Verfahren gemäß Anspruch 1, **dadurch gekennzeichnet, dass** die zeitliche Differenz des Anfangs der Chargen jeweils zweier zeitlich aufeinander folgender Rührbehälter im Bereich von 65%/n bis 135%/n der Chargenzeit beträgt.

3. Verfahren gemäß Anspruch 1 oder 2, **dadurch gekennzeichnet, dass** die zeitliche Differenz des Anfangs der Chargen jeweils zweier zeitlich aufeinander folgender Rührbehälter im Bereich von 80%/n bis 120%/n der Chargenzeit beträgt.

4. Verfahren gemäß einem der Ansprüche 1 bis 3, **dadurch gekennzeichnet, dass** die zeitliche Differenz des Anfangs der Chargen jeweils zweier zeitlich aufeinander folgender Rührbehälter im Bereich von 90%/n bis 110%/n der Chargenzeit beträgt.

5. Verfahren gemäß einem der Ansprüche 1 bis 4, **dadurch gekennzeichnet, dass** zwei, drei oder vier parallele Rührbehälter betrieben werden (n = 2, 3, 4).

6. Verfahren gemäß einem der Ansprüche 1 bis 5, **dadurch gekennzeichnet, dass** genau zwei parallele Rührbehälter betrieben werden (n = 2).

7. Verfahren gemäß einem der Ansprüche 1 bis 6, **dadurch gekennzeichnet, dass** das hydrophobe Lösungsmittel ein Kohlenwasserstoff oder ein Kohlenwasserstoffgemisch ist.

8. Verfahren gemäß Anspruche 7, **dadurch gekennzeichnet, dass** der Kohlenwasserstoff oder das Kohlenwasserstoffgemisch im Bereich von 50 bis 150°C siedet.

9. Verfahren gemäß einem der Ansprüche 1 bis 8, **dadurch gekennzeichnet, dass** die wässrige Monomerlösung mindestens ein Monomer a), mindestens einen Vernetzer b) und mindestens einen Initiator c) enthält.

## Claims

1. A process for batchwise production of superabsorbent particles by polymerization of an aqueous monomer solution dispersed in a hydrophobic solvent, in at least two parallel stirred vessels, where the hydrophobic solvent has a solubility in water at 23°C of less than 5 g/100 g, wherein the at least two stirred vessels are operated with a time offset and the relative time difference in the startup of the reaction in any two stirred vessels that are successive in time is in the range from 50%/n to 150%/n of the batch time, where n is the number of parallel stirred vessels and the batch time is the time between the startup of the reaction until the startup of the subsequent reaction in the same stirred vessel.

2. The process according to claim 1, wherein the time difference in the starting of the batches in any two stirred vessels that are successive in time is in the range from 65%/n to 135%/n of the batch time.

3. The process according to claim 1 or 2, wherein the time difference in the starting of the batches in any two stirred vessels that are successive in time is in the range from 80%/n to 120%/n of the batch time.

4. The process according to any of claims 1 to 3, wherein the time difference in the starting of the batches in any two stirred vessels that are successive in time is in the range from 90%/n to 110%/n of the batch time.

5. The process according to any of claims 1 to 4, wherein two, three or four parallel stirred vessels are operated (n = 2, 3, 4).

6. The process according to any of claims 1 to 5, wherein exactly two parallel stirred vessels are operated (n = 2).

7. The process according to any of claims 1 to 6, wherein the hydrophobic solvent is a hydrocarbon or hydrocarbon mixture.

8. The process according to claim 7, wherein the hydrocarbon or hydrocarbon mixture boils within the range from 50 to 150°C.

9. The process according to any of claims 1 to 8, wherein the aqueous monomer solution comprises at least one monomer a), at least one crosslinker b) and at least one initiator c).

## Revendications

1. Procédé pour la préparation de manière discontinue de particules de superabsorbant par polymérisation d'une solution aqueuse de monomères dispersée dans un solvant hydrophobe dans au moins deux cuves mélangeuses parallèles, le solvant hydrophobe présentant une solubilité dans l'eau à 23 °C inférieure à 5 g/100 g, **caractérisé en ce que** les au moins deux cuves mélangeuses fonctionnent de manière décalée dans le temps et la différence de temps relative du début de la réaction de deux cuves mélangeuses consécutives dans le temps est à chaque fois dans la plage de 50 %/n à 150 %/n du temps de charge, n étant le nombre de cuves mélangeuses parallèles et le temps de charge étant le temps entre le début de la réaction jusqu'au début de la réaction suivante dans la même cuve mélangeuse.

2. Procédé selon la revendication 1, **caractérisé en ce que** la différence dans le temps du début des charges de deux cuves mélangeuses consécutives dans le temps est à chaque fois dans la plage de 65 %/n à 135 %/n du temps de charge.

3. Procédé selon la revendication 1 ou 2, **caractérisé en ce que** la différence dans le temps du début des charges de deux cuves mélangeuses consécutives dans le temps est à chaque fois dans la plage de 80 %/n à 120 %/n du temps de charge.

4. Procédé selon l'une quelconque des revendications 1 à 3, **caractérisé en ce que** la différence dans le temps du début des charges de deux cuves mélangeuses consécutives dans le temps est à chaque fois dans la plage de 90 %/n à 110 %/n du temps de charge.

5. Procédé selon l'une quelconque des revendications 1 à 4, **caractérisé en ce que** deux, trois ou quatre cuves mélangeuses parallèles sont exploitées (n = 2, 3, 4) .

6. Procédé selon l'une quelconque des revendications 1 à 5, **caractérisé en ce qu'**exactement deux cuves mélangeuses parallèles sont exploitées (n = 2).

7. Procédé selon l'une quelconque des revendications 1 à 6, **caractérisé en ce que** le solvant hydrophobe est un hydrocarbure ou un mélange d'hydrocarbures.

8. Procédé selon la revendication 7, **caractérisé en ce que** l'hydrocarbure ou le mélange d'hydrocarbures bout dans la plage de 50 à 150 °C.

9. Procédé selon l'une quelconque des revendications 1 à 8, **caractérisé en ce que** la solution aqueuse de monomères contient au moins un monomère a), au moins un agent de réticulation b) et au moins un initiateur c).
